# EUROPÄISCHE PATENTANMELDUNG

(11) **EP 4 194 717 A1**
(43) Veröffentlichungstag der Anmeldung: **14.06.2023**
(21) Anmeldenummer: 22205787.9
(22) Anmeldetag: 07.11.2022
(51) Int. Cl.: F16H 57/031, G01P 1/12, F16H 57/02

(54) **ZUM ANBRINGEN EINES SENSORHALTERS VORBEREITETES GETRIEBE**

(30) Priorität: 07.12.2021 DE 102021213857
(71) Anmelder: ZF Friedrichshafen AG, 88046 Friedrichshafen (DE)
(72) Erfinder: Fauck, Matthias, 58452 Witten (DE); Quell, Andreas, 58453 Witten (DE)

(57) **Zusammenfassung**

Die Erfindung betrifft ein Getriebe (101) mit einem Getriebegehäuse (105) und einer Ein- oder Ausgangswelle (103); wobei das Getriebegehäuse (105) außen einen mindestens teilweise kreiszylindrischen Abschnitt (107) aufweist, der die Ein- oder Ausgangswelle (103) koaxial umgibt. Das Getriebe weist einen planen Abschnitt (109) in einer Mantelfläche des kreiszylindrischen Abschnitts (107) zum Anbringen eines Sensorhalters (201).

## Beschreibung

Die Erfindung betrifft ein Getriebe nach dem Oberbegriff von Anspruch 1, einen Sensorhalter nach dem Oberbegriff von Anspruch 4, eine Anordnung nach dem Oberbegriff von Anspruch 5, eine Baureihe nach dem Oberbegriff von Anspruch 6 und ein Verfahren nach dem Oberbegriff von Anspruch 7.

Aus dem Stand der Technik sind Getriebe mit Drehzahlsensoren bekannt. Zur Befestigung eines Drehzahlsensors ist es üblich, ein Durchgangsloch in einem Gehäuse des Getriebes mit einem Gewinde zu versehen und den Sensor dort einzuschrauben. Dazu ist eine räumliche Nähe des Lochs zu der Welle erforderlich, deren Drehzahl gemessen werden soll. Dies schränkt die möglichen Positionen zur Anbringung des Drehzahlsensors stark ein. Auch ist es nicht möglich, einen Drehzahlsensor auf einfache Weise nachzurüsten.

Eine Nachrüstlösung für Drehzahlsensoren ist aus der EP 1 956 559 A1 bekannt. Diese Druckschrift offenbart einen Sensorhalter, der sich außen an einem Kraftfahrzeuggetriebe anschrauben lässt. Das Getriebe ist für die Anbringung des Sensorhalters nicht vorbereitet. Daher gestaltet sich die Konstruktion des Sensorhalters in Abhängigkeit der baulichen Gegebenheiten des Getriebegehäuses schwierig. Auch die Montage des Sensorhalters kann sich aufwändig gestalten.

Der Erfindung liegt die Aufgabe zugrunde, ein Getriebe unter Umgehung der den aus dem Stand der Technik bekannten Lösungen innewohnenden Nachteile mit einem Bewegungssensor nachzurüsten. Diese Aufgabe wird gelöst durch ein Getriebe nach Anspruch 1, einen Sensorhalter nach Anspruch 4, eine Anordnung nach Anspruch 5, eine Baureihe nach Anspruch 6 und ein Verfahren nach Anspruch 7. Bevorzugte Weiterbildungen sind in den Unteransprüchen enthalten und ergeben sich aus nachfolgender Beschreibung.

Das erfindungsgemäße Getriebe weist ein Getriebegehäuse und eine Ein- oder Ausgangswelle auf. Die Ein- oder Ausgangswelle zeichnet sich dadurch aus, dass sie durch eine Öffnung des Getriebegehäuses hindurch verläuft. Ein Teil der Ein- oder Ausgangswelle befindet sich also außerhalb des Getriebegehäuses. Ein weiterer Teil der Ein- oder Ausgangswelle befindet sich außerhalb des Getriebegehäuses.

Außen weist das Getriebegehäuse einen mindestens teilweise kreiszylindrischen Abschnitt auf. Dies bedeutet, dass mindestens ein Teil der Außenfläche des Getriebegehäuses eine kreiszylindrische Form hat. Mindestens ein Teil der Oberfläche eines Kreiszylinders entspricht dem kreiszylindrischen Abschnitt.

Der kreiszylindrische Abschnitt umgibt die Ein- oder Ausgangswelle koaxial. Dies bedeutet, dass eine Drehachse der Ein- oder Ausgangswelle identisch ist mit einer Mittel- bzw. Symmetrieachse des genannten Kreiszylinders.

Erfindungsgemäß weist das Getriebegehäuse zum Anbringen eines Sensorhalters, das heißt eines Haltemittels für einen Sensor, mindestens einen planen Abschnitt auf. Ein planer Abschnitt ist eine ebene Teilfläche. Mit dem planen Abschnitt wird vorliegend also eine ebene Teilfläche einer äußeren, das heißt außerhalb des Getriebeinneren befindlichen Oberfläche bezeichnet.

Der plane Abschnitt befindet sich in einer Mantelfläche des kreiszylindrischen Abschnitts, das heißt in einer Mantelfläche des genannten Kreiszylinders. Insbesondere kann der plane Abschnitt rechteckig sein. Dabei verlaufen zwei gegenüberliegende Kanten des planen Abschnitts parallel zu der Mittelachse des genannten Kreiszylinders innerhalb von dessen Mantelfläche. Der plane Abschnitt ist vorzugsweise orthogonal zu dieser Mittelachse ausgerichtet.

Der plane Abschnitt ermöglicht es, einen Sensor nachzurüsten. Dies gestaltet sich vergleichsweise einfach, da das Getriebegehäuse durch den planen Abschnitt für die Nachrüstung des Sensors bereits vorbereitet ist. Entsprechend können Montageaspekte bei der Positionierung des planen Abschnitts berücksichtigt werden. Auch ohne einen Sensor oder einen Sensorhalter ist das erfindungsgemäße Getriebe betriebsbereit. Es ist daher möglich, baugleiche Getriebe mit und ohne Sensor auszuliefern. Um den Sensorhalter zu fixieren, weist der plane Abschnitt in einer bevorzugten Weiterbildung ein oder mehrere Gewinde auf. Die Gewinde dienen dazu, den Sensorhalter mit dem Getriebegehäuse zu verschrauben.

Die Ein- oder Ausgangswelle ist bevorzugt mit einem auf die Welle aufgebrachten Ring weitergebildet. Der Ring befindet sich außerhalb des Getriebegehäuses und weist mindestens eine Aussparung auf. Da auch der Sensorhalter und entsprechend ein an oder in dem Sensorhalter angebrachter Sensor sich außerhalb des Getriebes befinden, lässt sich die Aussparung mittels des Sensors detektieren. Auf die Weise ist es möglich, Bewegungsgrößen der Ein- oder Ausgangswelle zu ermitteln.

Ein erfindungsgemäßer Sensorhalter ist ausgebildet, an dem erfindungsgemäßen Getriebe oder einer bevorzugten Weiterbildung angebracht zu werden. Er weist erfindungsgemäße mindestens einen planen Abschnitt auf. Mit dem planen Abschnitt kann der Sensorhalter an dem planen Abschnitt des Getriebes angebracht werden. Dabei kommen die beiden planen Abschnitte aneinander zur Anlage.

Die erfindungsgemäße Anordnung umfasst einen Bewegungssensor und einen Sensorhalter. Ein Bewegungssensor bezeichnet einen Sensor zum Aufzeichnen einer oder mehrerer Bewegungsgrößen. Bei den Bewegungsgrößen kann es sich um eine Geschwindigkeit, eine Beschleunigung und/oder eine Drehzahl handeln. Im letztgenannten Fall handelt es sich bei dem Sensor um einen Drehzahlsensor.

Bei dem Sensorhalter handelt es sich bevorzugt um einen erfindungsgemäßen Sensorhalter. Dieser ist wie oben beschrieben ausgebildet.

Erfindungsgemäß gehört zu der Anordnung auch das oben beschriebene erfindungsgemäße Getriebe oder eine bevorzugte Weiterbildung. Der Bewegungssensor ist an dem Getriebegehäuse des Getriebes angebracht. Dabei nimmt der plane Abschnitt des Getriebegehäuses, wie oben beschrieben, den Sensorhalter auf. In oder an diesem ist der Bewegungssensor angebracht. Insbesondere kann der Bewegungssensor so angebracht sein, dass er eine oder mehrere Bewegungsgrößen der Ein- oder Ausgangswelle erfasst. Bei einer Weiterbildung der Ein- oder Ausgangswelle mit einem darauf aufgebrachten Ring, der sich außerhalb des Getriebegehäuses befindet und mindestens eine Aussparung aufweist, erfasst der Bewegungssensor bevorzugt diese Aussparung bei einer Drehung der Ein- oder Ausgangswelle. Eine erfindungsgemäße Baureihe umfasst erfindungsgemäß die erfindungsgemäße Anordnung sowie das erfindungsgemäße Getriebe oder eine bevorzugte Weiterbildung des Getriebes. In dem planen Abschnitt dieses Getriebes bzw. von dessen Getriebegehäuse ist kein Sensorhalter angebracht.

Die erfindungsgemäße Baureihe zeichnet sich durch baugleiche Getriebe aus, die sich hinsichtlich des Vorhandenseins eines Sensorhalters unterscheiden. Mindestens ein Getriebe der Baureihe weist einen solchen Sensorhalter auf, während mindestens ein weiteres Getriebe der Baureihe ohne einen Sensorhalter und damit ohne einen entsprechenden Sensor verbleibt.

Eine Baureihe ist definiert als eine Mehrzahl einzelner Vorrichtungen. Diese bilden die Baureihe, das heißt die Baureihe ist identisch mit deren Gesamtheit. Zu den Vorrichtungen der erfindungsgemäßen Baureihe zählen die erfindungsgemäße Anordnung und das erfindungsgemäße Getriebe oder dessen bevorzugte Weiterbildung.

Ein erfindungsgemäßes Verfahren dient zur Nachrüstung des erfindungsgemäßen Getriebes oder einer bevorzugten Weiterbildung mit einem Bewegungssensor. Das Verfahren sieht vor, dass der Bewegungssensor an oder in einem Sensorhalter, beispielsweise dem erfindungsgemäßen Sensorhalter, angebracht wird. Der Sensorhalter wiederum wird an dem planen Abschnitt des Getriebes bzw. von dessen Gehäuse angebracht.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
Fig. 1 ein Getriebe ohne Drehzahlsensor; und
Fig. 2 das Getriebe mit Drehzahlsensor.

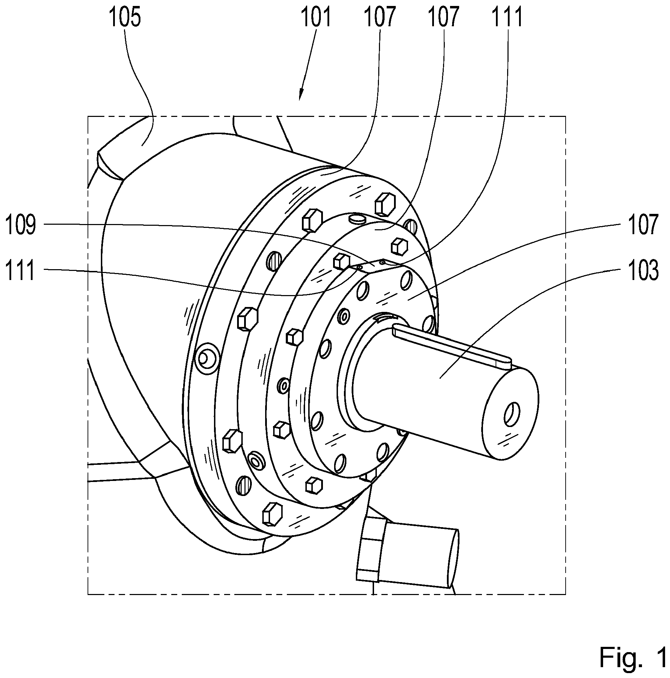

Das in Fig. 1 dargestellte Getriebe 101 weist eine Welle 103 auf. Die Welle 103 verläuft durch ein Getriebegehäuse 105 hindurch. Entsprechend handelt es sich um eine Eingangswelle oder eine Ausgangswelle.

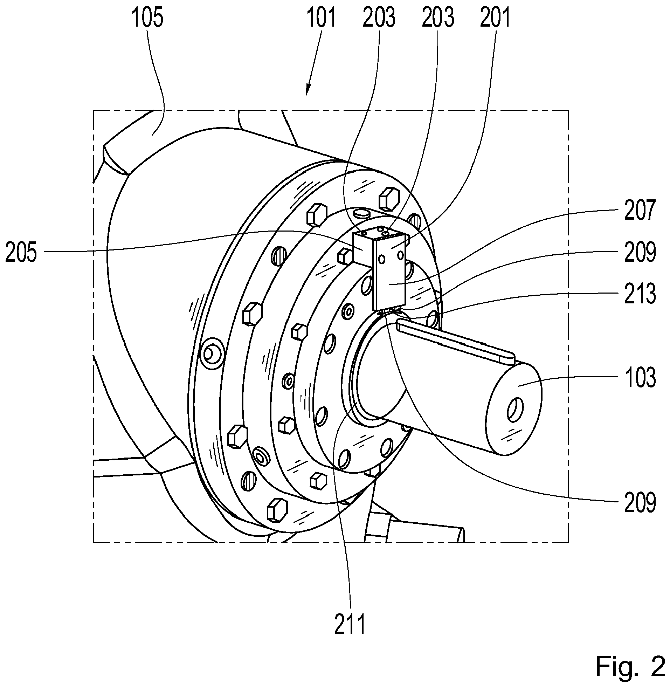

Die Welle 103 ist von mehreren kreiszylindrischen Abschnitten 107 umgeben. Einer dieser Abschnitte 107 weist eine plane Fläche 109 auf. In die Fläche 109 münden zwei Gewindelöcher 111. Diese dienen der Verschraubung eines in Fig. 2 dargestellten Sensorhalters.

Der Sensorhalter 201 bildet eine plane Fläche aus, die mit der planen Fläche 109 korrespondiert und auf dieser aufliegt. Zwei Schrauben 203 des Sensorhalters 201 sind in die Schraublöcher 111 eingeschraubt. Dadurch ist der Sensorhalter 201 an dem Getriebegehäuse 105 fixiert.

Der Sensorhalter 201 ist aufgebaut aus einem kubischen Stück 205 und einer Platte 207. Das kubische Stück 205 bildet die oben beschriebene plane Fläche aus. Auf das kubische Stück 205 ist die Platte 207 aufgeschraubt. An ihr sind zwei Drehzahlsensoren 209 angebracht.

Durch den Sensorhalter 201 werden die beiden Drehzahlsensoren 209 in unmittelbarer Nähe eines auf die Welle 103 aufgesetzten Rings 211 positioniert. Der Ring 211 ist mit einer Aussparung 213 versehen. Diese wird von den Drehzahlsensoren 209 detektiert, wenn sie die Drehzahlsensoren 209 passiert. Anhand eines entsprechenden Sensorsignals ermittelt ein mit den Sensoren 209 verbundenes Steuergerät die Drehzahl der Welle 103.

### Bezugszeichen

- 101: Getriebe
- 103: Welle
- 105: Getriebegehäuse
- 107: kreiszylindrischer Abschnitt
- 109: plane Fläche
- 111: Gewindeloch
- 201: Sensorhalter
- 203: Schraube
- 205: kubisches Stück
- 207: Platte
- 209: Drehzahlsensor
- 211: Ring
- 213: Aussparung

## Patentansprüche

1. Getriebe (101) mit einem Getriebegehäuse (105) und einer Ein- oder Ausgangswelle (103); wobei
das Getriebegehäuse (105) außen einen mindestens teilweise kreiszylindrischen Abschnitt (107) aufweist, der die Ein- oder Ausgangswelle (103) koaxial umgibt; **gekennzeichnet durch**
einen planen Abschnitt (109) in einer Mantelfläche des kreiszylindrischen Abschnitts (107) zum Anbringen eines Sensorhalters (201).

2. Getriebe (101) nach Anspruch 1; **dadurch gekennzeichnet, dass** der plane Abschnitt (109) ein oder mehrere Gewinde (111) zur Fixierung des Sensorhalters (201) aufweist.

3. Getriebe (101) nach einem der vorhergehenden Ansprüche; **gekennzeichnet durch** einen auf die Ein- oder Ausgangswelle (103) aufgebrachten Ring (211), der sich außerhalb des Getriebegehäuses (105) befindet und mindestens eine Aussparung () aufweist.

4. Sensorhalter (201) zum Anbringen an einem Getriebe (101) nach einem der vorhergehenden Ansprüche; **gekennzeichnet durch**
mindestens einen planen Abschnitt; wobei
der Sensorhalter (201) ausgebildet ist, mit seinem planen Abschnitt an dem planen Abschnitt (109) des Getriebes angebracht zu werden.

5. Anordnung mit einen Bewegungssensor (209) und einem Sensorhalter (201); **gekennzeichnet durch**
ein Getriebe nach einem der Ansprüche 1 bis 3; wobei
der Bewegungssensor (209) in oder an dem Sensorhalter (201) angebracht ist; und wobei
der Sensorhalter (201) ist, mit seinem planen Abschnitt an dem planen Abschnitt (109) des Getriebes angebracht.

6. Baureihe; **gekennzeichnet durch**
eine Anordnung nach dem vorhergehenden Anspruch und ein Getriebe (101) nach einem der Ansprüche 1 bis 3; wobei
an dem planen Abschnitt (109) des Getriebes kein Sensorhalter (201) angebracht ist.

7. Verfahren zur Nachrüstung eines Getriebes (101) nach einem der Ansprüche 1 bis 3 mit einem Bewegungssensor (209); **dadurch gekennzeichnet, dass**
der Bewegungssensor (209) an oder in einem Sensorhalter (201) angebracht wird; wobei
der Sensorhalter (201) an dem planen Abschnitt (109) des Getriebes () angebracht wird.
